# EUROPEAN PATENT APPLICATION

(11) **EP 4 443 926 A1**
(43) Date of publication of application: **09.10.2024**
(21) Application number: 22914856.4
(22) Date of filing: 28.12.2022
(51) Int. Cl.: H04W 12/06

(54) **COMMUNICATION METHOD AND APPARATUS**

(30) Priority: 29.12.2021 CN 202111648311
(71) Applicant: Huawei Technologies Co., Ltd., Shenzhen, Guangdong 518129 (CN)
(72) Inventor: YOU, Chunhua, Shenzhen, Guangdong 518129 (CN); LOU, Chong, Shenzhen, Guangdong 518129 (CN)
(74) Representative: Isarpatent
(86) International application number: PCT/CN2022/142614
(87) International publication number: WO 2023/125604

(57) **Abstract**

Embodiments of this application disclose a communication method and apparatus. The method includes: A terminal device receives first indication information and security parameter information that are sent by a first network device, where the first indication information indicates that use of a security verification-based system information obtaining mechanism is allowed, and the security parameter information is used to perform security verification on system information; and sends a first message to a second network device, where the first message is used to request security verification-based first system information. According to embodiments of this application, security verification-based system information is obtained, so that the system information is prevented from being tampered with, and security of the system information is improved.

## Description

This application claims priority to Chinese Patent Application No. 202111648311.5, filed with the China National Intellectual Property Administration on December 29, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

System information mainly includes a master information block (master information block, MIB) and a plurality of system information blocks (system information blocks, SIBs), where the SIB mainly includes an SIB 1 and another SIB. The MIB and the SIB 1 are periodically broadcast, and the another SIB may be periodically broadcast, or may be broadcast on demand (on demand). The MIB mainly includes cell barred status (cell barred status) information and information necessary for receiving a subsequent SIB at a physical layer, such as control resource set (control resource set #0, CORESET #0) configuration. The SIB 1 mainly includes scheduling information of other system information and initial access information. For a terminal device in a radio resource control idle (radio resource control IDLE, RRC IDLE) state or an RRC inactive (RRC INACTIVE) state, security verification is not performed on obtained system information, and the system information obtained by the terminal device may be tampered with, being a security risk.

### SUMMARY

Embodiments of this application provide a communication method and apparatus, to prevent system information from being tampered with, thereby improving security of the system information.

According to a first aspect, an embodiment of this application provides a communication method, where the method is applied to a terminal device or a chip in a terminal device, and includes: receiving first indication information and security parameter information that are sent by a first network device, where the first indication information indicates that use of a security verification-based system information obtaining mechanism is allowed, and the security parameter information is used to perform security verification on system information; and sending a first message to a second network device, where the first message is used to request security verification-based first system information. A terminal device in an RRC inactive state requests the system information from the network device by using the security verification-based system information obtaining mechanism. Because security protection is performed on an SRB 1 after the SRB 1 is resumed, the network device transmits, via the SRB 1, the system information on which security protection is performed, to prevent the system information from being tampered with, thereby improving security of the system information.

In a possible design, second indication information of the second network device is received, where the second indication information indicates that the second network device supports the security verification-based system information. The terminal device is notified, via the second indication information, that the security verification-based system information may be requested.

In another possible design, the first message is a radio resource control RRC system information request message or a dedicated system information request message.

In another possible design, a second message sent by the second network device is received, where the second message includes the first system information, and security protection is performed on the second message; and security verification is performed on the second message based on the security parameter information. The security verification is performed on the second message, to ensure security of the obtained first system information, prevent the system information from being tampered with, thereby improving security of the system information.

In another possible design, the first system information sent by the second network device is received, where security protection is not performed on the first system information.

In another possible design, a hash security instruction sent by the second network device is received, where the hash security instruction includes a hash parameter, and the hash parameter is used to determine a hash value of the first system information; and the hash value of the first system information is sent to the second network device, where the hash value of the first system information is used to determine whether the first system information received by the terminal device is tampered with. When security protection is not performed on the first system information received by the terminal device, whether the received first system information is tampered with is determined by calculating the hash value of the first system information. This improves security of the system information.

In another possible design, a third message sent by the second network device is received, where security protection is performed on the third message; and security verification is performed on the third message based on the security protection parameter. The security verification is performed on the third message to ensure security of the third information.

In another possible design, the third message includes third indication information, and the third indication information indicates whether the first system information received by the terminal device is tampered with. Whether the first system information received by the terminal device is tampered with is indicated via the third indication information to indicate security of the received first system information.

In another possible design, when the first system information received by the terminal device is tampered with, the third message includes the first system information that is not tampered with. When the first system information is tampered with, the first system information is retransmitted, to ensure system information security.

According to a second aspect, an embodiment of this application provides a communication method, where the method is applied to a second network device or a chip in a second network device, and the method includes: receiving a first message sent by a terminal device, where the first message is used to request security verification-based first system information; and sending the first system information to the terminal device. A terminal device in an RRC inactive state requests the system information from the network device by using the security verification-based system information obtaining mechanism. Because security protection is performed on an SRB 1 after the SRB 1 is resumed, the network device transmits, via the SRB 1, the system information on which security protection is performed, to prevent the system information from being tampered with, thereby improving security of the system information.

In a possible design, second indication information is sent to the terminal device, where the second indication information indicates that the second network device supports the security verification-based system information. The terminal device is notified, via the second indication information, that the security verification-based system information may be requested.

In another possible design, the first message is a radio resource control RRC system information request message or a dedicated system information request message.

In another possible design, the first system information is included in a second message, and security protection is performed on the second message. The security protection is performed on the second message, to ensure security of the first system information, and prevent the first system information from being tampered with.

In another possible design, a first request is sent to a first network device; and a first response sent by the first network device is received, where the first response includes a security protection parameter, the security protection parameter is determined based on security parameter information, and the security protection parameter is used to perform security protection on the second message. When anchor relocation is performed, the second network device requests the security protection parameter from the first network device, and then performs security protection on the second message based on the security protection parameter, to ensure security of the first system information transmitted to the terminal device, and prevent the first system information from being tampered with.

In another possible design, the first request includes a cause value, the cause value is that the terminal device requests the security verification-based first system information, and the cause value indicates the first network device to determine whether to perform anchor relocation.

In another possible design, the first response further indicates to perform anchor relocation.

In another possible design, a second request is sent to a first network device, where the second request includes the first system information; and a second response sent by the first network device is received, where the second response includes the second message, the second message includes the first system information, and security protection is performed on the second message. When anchor relocation is not performed, the first network device performs security protection on the first system information, to ensure security of the first system information transmitted to the terminal device, and prevent the first system information from being tampered with.

In another possible design, the second request includes a cause value, the cause value is that the terminal device requests the security verification-based first system information, and the cause value indicates the first network device to determine whether to perform anchor relocation.

In another possible design, the second response further indicates not to perform anchor relocation.

In another possible design, security protection is not performed on the first system information.

In another possible design, a third request is sent to a first network device, where the third request is used to request a hash parameter of security verification; and a third response sent by the first network device is received, where the third response includes a third message, and the third message includes the hash parameter. When the terminal device receives the first system information on which security protection is not performed, the terminal device requests the hash parameter from the first network device, to perform security verification on the first system information, to ensure security of the first system information and prevent the first system information from being tampered with.

In another possible design, the third request includes a cause value, the cause value is that the terminal device requests the security verification-based first system information, and the cause value indicates the first network device to determine whether to perform anchor relocation.

In another possible design, the third response further indicates not to perform anchor relocation.

In another possible design, a hash security instruction is sent to the terminal device, where the hash security instruction includes the hash parameter, and the hash parameter is used to determine a hash value of the first system information; and the hash value that is of the first system information and that is sent by the terminal device is received, where the hash value of the first system information is used to determine whether the first system information received by the terminal device is tampered with. The second network device determines, by calculating the hash value of the first system information and the received hash value of the terminal device, whether the first system information is tampered with, to ensure security of the first system information, and prevent the first system information from being tampered with.

In another possible design, the third message is sent to the terminal device, where security protection is performed on the third message. The security protection is performed on the third message to ensure security of the information.

In another possible design, the third message includes third indication information, and the third indication information indicates whether the first system information received by the terminal device is tampered with.

In another possible design, when the first system information received by the terminal device is tampered with, the third message includes the first system information that is not tampered with.

According to a third aspect, an embodiment of this application provides a communication method, where the method is applied to a first network device or a chip in a first network device, and the method includes: obtaining security parameter information; and sending first indication information and the security parameter information to a terminal device, where the first indication information indicates that use of a security verification-based system information obtaining mechanism is allowed, and the security parameter information is used to perform security verification on system information. A terminal device in an RRC inactive state requests the system information from the network device by using the security verification-based system information obtaining mechanism. Because security protection is performed on an SRB 1 after the SRB 1 is resumed, the network device transmits, via the SRB 1, the system information on which security protection is performed, to prevent the system information from being tampered with, thereby improving security of the system information.

In a possible design, a first request sent by a second network device is received; and a first response is sent to the second network device, where the first response includes a security protection parameter, the security protection parameter is determined based on security parameter information, and the security protection parameter is used to perform security protection on the system information. When anchor relocation is performed, the second network device requests the security protection parameter from the first network device, and then performs security protection on a second message based on the security protection parameter, to ensure security of first system information transmitted to the terminal device, and prevent the first system information from being tampered with.

In another possible design, the first request includes a cause value, the cause value is that the terminal device requests the security verification-based first system information, and the cause value indicates the first network device to determine whether to perform anchor relocation.

In another possible design, the first response further indicates to perform anchor relocation.

In another possible design, a second request sent by the second network device is received, where the second request includes the first system information; and a second response is sent to the second network device, where the second response includes the second message, the second message includes the first system information, and security protection is performed on the second message based on the security parameter information. When anchor relocation is not performed, the first network device performs security protection on the first system information, to ensure security of the first system information transmitted to the terminal device, and prevent the first system information from being tampered with.

In another possible design, the second request includes a cause value, the cause value is that the terminal device requests the security verification-based first system information, and the cause value indicates the first network device to determine whether to perform anchor relocation.

In another possible design, the second response further indicates not to perform anchor relocation.

In another possible design, a third request sent by the second network device is received, where the third request includes requesting a hash parameter of security verification; and a third response is sent to the second network device, where the third response includes a third message, and the third message includes the hash parameter. When the terminal device receives the first system information on which security protection is not performed, the terminal device requests the hash parameter from the first network device, to perform security verification on the first system information, to ensure security of the first system information and prevent the first system information from being tampered with.

In another possible design, the third request includes a cause value, the cause value is that the terminal device requests the security verification-based first system information, and the cause value indicates the first network device to determine whether to perform anchor relocation.

In another possible design, the third response further indicates not to perform anchor relocation.

According to a fourth aspect, an embodiment of this application provides a communication method, where the method is applied to a terminal device or a chip in a terminal device, and the method includes: sending a first message to a network device, where the first message is used to request security verification-based first system information; and receiving the first system information on which NAS security protection is performed. For an RRC idle terminal device, the network device transmits system information via a NAS message, and the terminal device performs security verification on the system information by using a NAS security mechanism, so that the terminal device is prevented from receiving tampered system information, and security of the system information is improved.

In a possible design, indication information sent by the network device is received, where the indication information indicates that the network device supports the security verification-based system information. The terminal device is notified, via the indication information, that the security verification-based system information may be requested.

In another possible design, security verification is performed on the received first system information through NAS security. The first system information is verified through NAS security, so that the terminal device is prevented from receiving the tampered first system information, thereby improving security of the system information.

According to a fifth aspect, an embodiment of this application provides a communication method, where the method is applied to a network device or a chip in a network device, and the method includes: receiving a first message sent by a terminal device, where the first message is used to request security verification-based first system information; and sending the first system information on which NAS security protection is performed to the terminal device. For an RRC idle terminal device, the network device transmits system information via a NAS message, and the terminal device performs security verification on the system information by using a NAS security mechanism, so that the terminal device is prevented from receiving tampered system information, and security of the system information is improved.

In a possible design, indication information is sent to the terminal device, where the indication information indicates that the network device supports the security verification-based system information. The terminal device is notified, via the indication information, that the security verification-based system information may be requested.

In another possible design, a fourth request is sent to a core network device, where the fourth request includes the first system information requested by the terminal device; and a fourth response sent by the core network device is received, where the fourth response includes the first system information on which NAS security protection is performed. The terminal device is prevented from receiving the tampered first system information by transmitting the first system information on which NAS security protection is performed.

According to a sixth aspect, an embodiment of this application provides a communication method, where the method is applied to a terminal device or a chip in a terminal device, and the method includes: sending a first message to a network device, where the first message is used to request security verification-based first system information; and receiving a security activation command sent by the network device, where the security activation command is used to activate AS security. For an RRC idle terminal device, AS security is not activated, and the terminal device may request a NAS to activate the AS security. The network device performs security protection on the system information through the AS security, and the terminal device performs security verification on the system information through the activated AS security, so that the terminal device is prevented from receiving tampered system information, and security of the system information is improved.

In a possible design, indication information sent by the network device is received, where the indication information indicates that the network device supports the security verification-based system information. The terminal device is notified, via the indication information, that the security verification-based system information may be requested.

In another possible design, a security activation complete message is sent to the network device. The security activation complete message is sent to notify that AS security activation is completed, and the first system information may be transmitted based on the activated AS security.

According to a seventh aspect, an embodiment of this application provides a communication method, where the method is applied to a network device or a chip in a network device, and the method includes: receiving a first message sent by a terminal device, where the first message is used to request security verification-based first system information; and sending a security activation command to the terminal device, where the security activation command is used to activate AS security. For an RRC idle terminal device, AS security is not activated, and the terminal device may request a NAS to activate the AS security. The network device performs security protection on the system information through the AS security, and the terminal device performs security verification on the system information through the activated AS security, so that the terminal device is prevented from receiving tampered system information, and security of the system information is improved.

In a possible design, indication information is sent to the terminal device, where the indication information indicates that the network device supports the security verification-based system information. The terminal device is notified, via the indication information, that the security verification-based system information may be requested.

In another possible design, a fifth request is sent to a core network device, where the fifth request includes a cause value, and the cause value is that the terminal device requests the security verification-based first system information; and a fifth response sent by the core network device is received, where the fifth response is the AS security activation command. The AS security of the RRC idle terminal device is activated by using the AS security activation command.

In another possible design, a security activation complete message sent by the terminal device is received. The security activation complete message is sent to notify that AS security activation is completed, and the first system information may be transmitted based on the activated AS security.

According to an eighth aspect, an embodiment of this application provides a communication apparatus, including:
a receiving module, configured to receive first indication information and security parameter information that are sent by a first network device, where the first indication information indicates that use of a security verification-based system information obtaining mechanism is allowed, and the security parameter information is used to perform security verification on system information; and
a sending module, configured to send a first message to a second network device, where the first message is used to request security verification-based first system information.

In a possible design, the receiving module is further configured to receive second indication information of the second network device, where the second indication information indicates that the second network device supports the security verification-based system information.

In another possible design, the first message is a radio resource control RRC system information request message or a dedicated system information request message.

In another possible design, the receiving module is further configured to receive a second message sent by the second network device, where the second message includes the first system information, and security protection is performed on the second message.

The apparatus further includes:
a processing module, configured to perform security verification on the second message based on the security parameter information.

In another possible design, the receiving module is further configured to receive the first system information sent by the second network device, where security protection is not performed on the first system information.

In another possible design, the receiving module is further configured to receive a hash security instruction sent by the second network device, where the hash security instruction includes a hash parameter, and the hash parameter is used to determine a hash value of the first system information; and
the sending module is further configured to send the hash value of the first system information to the second network device, where the hash value of the first system information is used to determine whether the first system information received by the terminal device is tampered with.

In another possible design, the receiving module is further configured to receive a third message sent by the second network device, where security protection is performed on the third message.

The apparatus further includes:
a processing module, configured to perform security verification on the third message based on a security protection parameter.

In another possible design, the third message includes third indication information, and the third indication information indicates whether the first system information received by the terminal device is tampered with.

In another possible design, when the first system information received by the terminal device is tampered with, the third message includes the first system information that is not tampered with.

For operations performed by the communication apparatus and beneficial effect thereof, refer to the method in the first aspect and beneficial effect thereof. Repeated parts are not described again.

According to a ninth aspect, an embodiment of this application provides a communication apparatus, including:
a receiving module, configured to receive a first message sent by a terminal device, where the first message is used to request security verification-based first system information; and
a sending module, configured to send the first system information to the terminal device.

In a possible design, the sending module is further configured to send second indication information to the terminal device, where the second indication information indicates that a second network device supports the security verification-based system information.

In another possible design, the first message is a radio resource control RRC system information request message or a dedicated system information request message.

In another possible design, the first system information is included in a second message, and security protection is performed on the second message.

In another possible design, the sending module is further configured to send a first request to a first network device; and
the receiving module is further configured to receive a first response sent by the first network device, where the first response includes a security protection parameter, the security protection parameter is determined based on security parameter information, and the security protection parameter is used to perform security protection on the second message.

In another possible design, the first request includes a cause value, the cause value is that the terminal device requests the security verification-based first system information, and the cause value indicates the first network device to determine whether to perform anchor relocation.

In another possible design, the first response further indicates to perform anchor relocation.

In another possible design, the sending module is further configured to send a second request to a first network device, where the second request includes the first system information; and
the receiving module is further configured to receive a second response sent by the first network device, where the second response includes the second message, the second message includes the first system information, and security protection is performed on the second message.

In another possible design, the second request includes a cause value, the cause value is that the terminal device requests the security verification-based first system information, and the cause value indicates the first network device to determine whether to perform anchor relocation.

In another possible design, the second response further indicates not to perform anchor relocation.

In another possible design, security protection is not performed on the first system information.

In another possible design, the sending module is further configured to send a third request to a first network device, where the third request is used to request a hash parameter of the security verification; and
the receiving module is further configured to receive a third response sent by the first network device, where the third response includes a third message, and the third message includes the hash parameter.

In another possible design, the third request includes a cause value, the cause value is that the terminal device requests the security verification-based first system information, and the cause value indicates the first network device to determine whether to perform anchor relocation.

In another possible design, the third response further indicates not to perform anchor relocation.

In another possible design, the sending module is further configured to send a hash security instruction to the terminal device, where the hash security instruction includes the hash parameter, and the hash parameter is used to determine a hash value of the first system information; and
the receiving module is further configured to receive the hash value that is of the first system information and that is sent by the terminal device, where the hash value of the first system information is used to determine whether the first system information received by the terminal device is tampered with.

In another possible design, the sending module is further configured to send the third message to the terminal device, where security protection is performed on the third message.

In another possible design, the third message includes third indication information, and the third indication information indicates whether the first system information received by the terminal device is tampered with.

In another possible design, when the first system information received by the terminal device is tampered with, the third message includes the first system information that is not tampered with.

For operations performed by the communication apparatus and beneficial effect thereof, refer to the method in the second aspect and beneficial effect thereof. Repeated parts are not described again.

According to a tenth aspect, an embodiment of this application provides a communication apparatus, including:
an obtaining module, configured to obtain security parameter information; and
a sending module, configured to send first indication information and the security parameter information to a terminal device, where the first indication information indicates that use of a security verification-based system information obtaining mechanism is allowed, and the security parameter information is used to perform security verification on system information.

In a possible design, the obtaining module is further configured to receive a first request sent by a second network device; and
the sending module is further configured to send a first response to the second network device, where the first response includes a security protection parameter, the security protection parameter is determined based on the security parameter information, and the security protection parameter is used to perform security protection on the system information.

In another possible design, the first request includes a cause value, the cause value is that the terminal device requests the security verification-based first system information, and the cause value indicates the first network device to determine whether to perform anchor relocation.

In another possible design, the first response further indicates to perform anchor relocation.

In another possible design, the obtaining module is further configured to receive a second request sent by the second network device, where the second request includes the first system information; and
the sending module is further configured to send a second response to the second network device, where the second response includes a second message, the second message includes the first system information, and security protection is performed on the second message based on the security parameter information.

In another possible design, the second request includes a cause value, the cause value is that the terminal device requests the security verification-based first system information, and the cause value indicates the first network device to determine whether to perform anchor relocation.

In another possible design, the second response further indicates not to perform anchor relocation.

In another possible design, the obtaining module is further configured to receive a third request sent by the second network device, where the third request includes requesting a hash parameter of the security verification; and
the sending module is further configured to send a third response to the second network device, where the third response includes a third message, and the third message includes the hash parameter.

In another possible design, the third request includes a cause value, the cause value is that the terminal device requests the security verification-based first system information, and the cause value indicates the first network device to determine whether to perform anchor relocation.

In another possible design, the third response further indicates not to perform anchor relocation.

For operations performed by the communication apparatus and beneficial effect thereof, refer to the method in the third aspect and beneficial effect thereof. Repeated parts are not described again.

According to an eleventh aspect, an embodiment of this application provides a communication apparatus, including:
a sending module, configured to send a first message to a network device, where the first message is used to request security verification-based first system information; and
a receiving module, configured to receive the first system information on which NAS security protection is performed.

In a possible design, the receiving module is further configured to receive indication information sent by the network device, where the indication information indicates that the network device supports the security verification-based system information.

In another possible design, the apparatus further includes a processing module, and
the processing module is configured to perform security verification on the received first system information through NAS security.

For operations performed by the communication apparatus and beneficial effect thereof, refer to the method in the fourth aspect and beneficial effect thereof. Repeated parts are not described again.

According to a twelfth aspect, an embodiment of this application provides a communication apparatus, including:
a receiving module, configured to receive a first message sent by a terminal device, where the first message is used to request security verification-based first system information; and
a sending module, configured to send the first system information on which NAS security protection is performed to the terminal device.

In a possible design, the sending module is further configured to send indication information to the terminal device, where the indication information indicates that a network device supports the security verification-based system information.

In another possible design, the sending module is further configured to send a fourth request to a core network device, where the fourth request includes the first system information requested by the terminal device; and the receiving module is further configured to receive a fourth response sent by the core network device, where the fourth response includes the first system information on which NAS security protection is performed.

For operations performed by the communication apparatus and beneficial effect thereof, refer to the method in the fifth aspect and beneficial effect thereof. Repeated parts are not described again.

According to a thirteenth aspect, an embodiment of this application provides a communication apparatus, including:
a sending module, configured to send a first message to a network device, where the first message is used to request security verification-based first system information; and
a receiving module, configured to receive a security activation command sent by the network device, where the security activation command is used to activate AS security.

In a possible design, the receiving module is further configured to receive indication information sent by the network device, where the indication information indicates that the network device supports the security verification-based system information.

In another possible design, the sending module is further configured to send a security activation complete message to the network device.

For operations performed by the communication apparatus and beneficial effect thereof, refer to the method in the sixth aspect and beneficial effect thereof. Repeated parts are not described again.

According to a fourteenth aspect, an embodiment of this application provides a communication apparatus, including:
a receiving module, configured to receive a first message sent by a terminal device, where the first message is used to request security verification-based first system information; and
a sending module, configured to send a security activation command to the terminal device, where the security activation command is used to activate AS security.

In a possible design, the sending module is further configured to send indication information to the terminal device, where the indication information indicates that a network device supports the security verification-based system information.

In another possible design, the sending module is further configured to send a fifth request to a core network device, where the fifth request includes a cause value, and the cause value is that the terminal device requests the security verification-based first system information; and the receiving module is further configured to receive a fifth response sent by the core network device, where the fifth response is the AS security activation command.

In another possible design, the receiving module is further configured to receive a security activation complete message sent by the terminal device.

For operations performed by the communication apparatus and beneficial effect thereof, refer to the method in the seventh aspect and beneficial effect thereof. Repeated parts are not described again.

According to a fifteenth aspect, an embodiment of this application provides a communication apparatus. The communication apparatus is configured to implement the methods and the functions performed by the terminal device in the first aspect, the fourth aspect, and the sixth aspect, and any possible design of the first aspect, the fourth aspect, and the sixth aspect, and is implemented by hardware/software. The hardware/software of the communication apparatus includes modules corresponding to the foregoing functions.

According to a sixteenth aspect, an embodiment of this application provides a communication apparatus. The communication apparatus is configured to implement the methods and the functions performed by the second network device in the first aspect and any possible design of the first aspect, and is implemented by hardware/software. The hardware/software of the communication apparatus includes modules corresponding to the foregoing functions.

According to a seventeenth aspect, an embodiment of this application provides a communication apparatus. The communication apparatus is configured to implement the methods and the functions performed by the first network device in the third aspect and any possible design of the third aspect, and is implemented by hardware/software. The hardware/software of the communication apparatus includes modules corresponding to the foregoing functions.

According to an eighteenth aspect, this application provides a communication apparatus. The apparatus may be a terminal device, or may be an apparatus in the terminal device, or may be an apparatus that can be used together with the terminal device. The communication apparatus may alternatively be a chip system. The communication apparatus may perform the method according to the first aspect. Functions of the communication apparatus may be implemented by hardware, or may be implemented by hardware executing corresponding software. The hardware or the software includes one or more modules corresponding to the functions. The module may be software and/or hardware. For operations performed by the communication apparatus and beneficial effect thereof, refer to the method in the first aspect and beneficial effect thereof. Repeated parts are not described again.

According to a nineteenth aspect, this application provides a communication apparatus. The apparatus may be a second network device, or may be an apparatus in the second network device, or may be an apparatus that can be used together with the second network device. The communication apparatus may alternatively be a chip system. The communication apparatus may perform the method according to the second aspect. Functions of the communication apparatus may be implemented by hardware, or may be implemented by hardware executing corresponding software. The hardware or the software includes one or more modules corresponding to the functions. The module may be software and/or hardware. For operations performed by the communication apparatus and beneficial effect thereof, refer to the method in the second aspect and beneficial effect thereof. Repeated parts are not described again.

According to a twentieth aspect, this application provides a communication apparatus. The apparatus may be a first network device, or may be an apparatus in the first network device, or may be an apparatus that can be used together with first network device. The communication apparatus may alternatively be a chip system. The communication apparatus may perform the method in the third aspect. Functions of the communication apparatus may be implemented by hardware, or may be implemented by hardware executing corresponding software. The hardware or the software includes one or more modules corresponding to the functions. The module may be software and/or hardware. For operations performed by the communication apparatus and beneficial effect thereof, refer to the method in the third aspect and beneficial effect thereof. Repeated parts are not described again.

According to a twenty-first aspect, this application provides a communication apparatus. The communication apparatus includes a processor. When the processor invokes a computer program in a memory, the method according to any one of the first aspect to the seventh aspect is performed.

According to a twenty-second aspect, this application provides a communication apparatus. The communication apparatus includes a processor and a memory, and the memory is configured to store a computer program. The processor is configured to execute the computer program stored in the memory, so that the communication apparatus performs the method according to any one of the first aspect to the seventh aspect.

According to a twenty-third aspect, this application provides a communication apparatus. The communication apparatus includes a processor, a memory, and a transceiver. The transceiver is configured to receive a channel or a signal, or send a channel or a signal. The memory is configured to store a computer program. The processor is configured to invoke the computer program from the memory to perform the method according to any one of the first aspect to the seventh aspect.

According to a twenty-fourth aspect, this application provides a communication apparatus, where the communication apparatus includes a processor and an interface circuit. The interface circuit is configured to receive a computer program and transmit the computer program to the processor. The processor runs the computer program to perform the method according to any one of the first aspect to the seventh aspect.

According to a twenty-fifth aspect, this application provides a computer-readable storage medium. The computer-readable storage medium is configured to store a computer program, and when the computer program is executed, the method according to any one of the first aspect to the seventh aspect is implemented.

According to a twenty-sixth aspect, this application provides a computer program product including a computer program. When the computer program is executed, the method according to any one of the first aspect to the seventh aspect is implemented.

According to a twenty-seventh aspect, an embodiment of this application provides a communication system. The communication system includes at least one terminal device and at least one network device. The terminal device is configured to perform the steps in the first aspect, the fourth aspect, and the sixth aspect. The network device is configured to perform the steps in the second aspect, the third aspect, the fifth aspect, and the seventh aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1(A) is a diagram of an architecture of a communication system according to an embodiment of this application;
FIG. 1(B) is a diagram of an architecture of another communication system according to an embodiment of this application;
FIG. 2 is a diagram of resuming from an RRC inactive state to an RRC connected state;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a diagram of a structure of a communication apparatus according to an embodiment of this application;
FIG. 9 is a diagram of a structure of a communication apparatus according to an embodiment of this application;
FIG. 10 is a diagram of a structure of a communication apparatus according to an embodiment of this application;
FIG. 11 is a diagram of a structure of a terminal device according to an embodiment of this application;
FIG. 12 is a diagram of a structure of a second network device according to an embodiment of this application; and
FIG. 13 is a diagram of a structure of a first network device according to an embodiment of this application.

### DESCRIPTION OF EMBODIMENTS

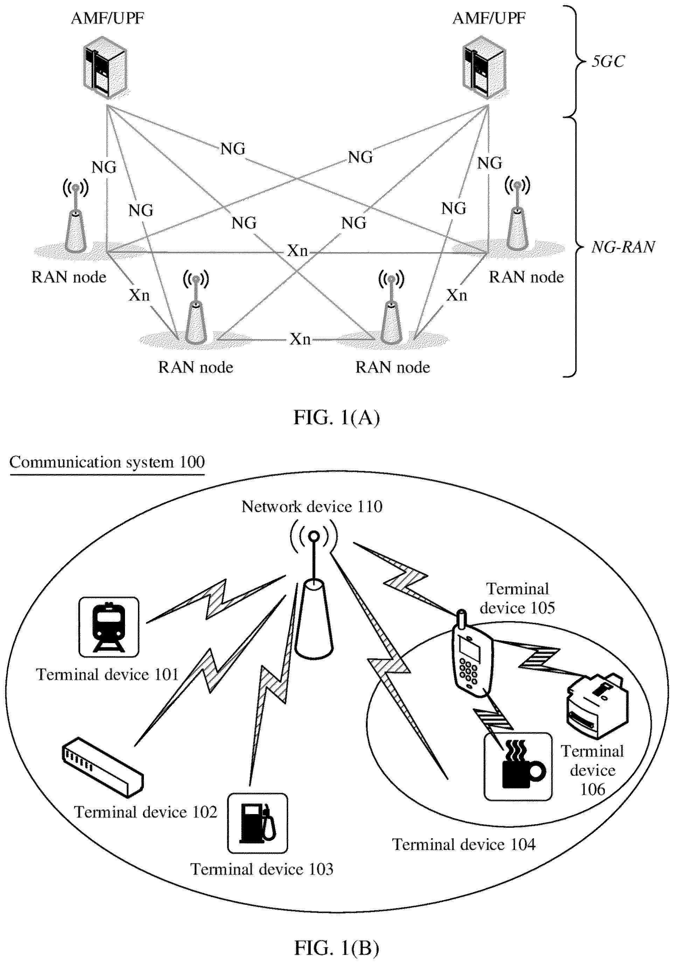

FIG. 1(A) is a diagram of an architecture of a communication system according to an embodiment of this application. The communication system includes two parts: a next generation radio access network (Next generation radio access network, NG-RAN) and a core network (5GC, 5th generation core network). The NG-RAN is configured to implement a function related to radio access. The NG-RAN mainly includes a RAN node. The core network mainly includes an access and mobility management function (access and mobility management function, AMF) entity and a user plane function (user plane function, UPF) entity.

The RAN node is a device that provides radio access for a terminal device. The RAN node includes a 5G base station (next generation nodeB, gNB) or an LTE base station (not next generation evolved NodeB, ng-eNB). The gNB provides terminations of a user plane protocol stack and a control plane protocol stack of new radio (new radio, NR). The ng-eNB provides terminations of a user plane protocol stack and a control plane protocol stack of an evolved UMTS terrestrial radio access network (evolved UMTS terrestrial radio access network, E-UTRAN). A connection may be established between the gNB and the gNB, the gNB and the ng-eNB, or the ng-eNB and ng-eNB through an Xn interface. The gNB and the ng-eNB are connected to the 5GC through a next generation (next generation, NG) interface. Specifically, the gNB and the ng-eNB are connected to the AMF entity through an NG-C interface, and are connected to the UPF entity through an NR-U interface.

The AMF entity is mainly responsible for mobility management in a mobile network, such as user location update, user network registration, and user handover. The UPF entity is mainly responsible for processing a user packet, for example, forwarding and charging.

FIG. 1(B) is a diagram of an architecture of another communication system according to an embodiment of this application. The communication system 100 may include a network device 110 and a terminal device 101 to a terminal device 106. It should be understood that the communication system 100 to which the method in embodiments of this application is applicable may include more or fewer network devices or terminal devices. The network device or the terminal device may be hardware, may be software obtained through functional division, or may be a combination thereof. The network device or the terminal device may communicate with each other by using another device or network element. In the communication system 100, the network device 110 may send downlink data to the terminal device 101 to the terminal device 106. Certainly, the terminal device 101 to the terminal device 106 may alternatively send uplink data to the network device 110. The terminal device 101 to the terminal device 106 may be a cellular phone, a smartphone, a portable computer, a handheld communication device, a handheld computing device, a satellite radio apparatus, a global positioning system, a personal digital assistant (personal digital assistant, PDA), and/or any other suitable device configured to perform communication in the wireless communication system 100. The network device 110 may be a long term evolution (long term evolution, LTE) network device and/or an NR network device, and may be specifically a NodeB (NodeB), an evolved NodeB (eNodeB), a base station in a 5G mobile communication system, a next generation mobile communication NodeB (next generation NodeB, gNB), a base station in a future mobile communication system, or an access node in a Wi-Fi system.

The communication system 100 may use a public land mobile network (public land mobile network, PLMN), a vehicle to everything (vehicle to everything, V2X) network, a device-to-device (device-to-device, D2D) network, a machine to machine (machine to machine, M2M) network, an internet of things (internet of things, IoT), or another network. In addition, the terminal device 104 to the terminal device 106 may alternatively form a communication system. In the communication system, the terminal device 105 may send downlink data to the terminal device 104 or the terminal device 106. The method in embodiments of this application may be applied to the communication system 100 shown in FIG. 1(B).

The 3rd generation partnership project (3rd generation partnership project, 3GPP) introduces three RRC states to a 5G network: an RRC idle (RRC IDLE) state, an RRC inactive (RRC INACTIVE) state, and an RRC connected (RRC CONNECTED) state.

In the RRC connected state, there is a dedicated RRC connection between the terminal device and the network device. The dedicated RRC connection may be a connection of a data radio bearer (data radio bearer, DRB) or a connection of a signaling radio bearer 1 (signaling radio bearers 1, SRB 1).

In the RRC idle state, there is no dedicated RRC connection between the terminal device and the network device.

In the RRC inactive state, the terminal device may not need to notify the network device when moving in the network device. The terminal device stores a context of the terminal device, and a last serving gNB (Last serving gNB) of the terminal device stores the context of the terminal device and NG connections to the AMF entity and the UPF entity. The dedicated RRC connection between the terminal device and the network device is suspended, and may be resumed subsequently. The terminal device performs cell reselection in the RRC inactive state.

The RRC inactive state is a new RRC state in 5G, so that the terminal device can quickly resume to the RRC connected state without re-access. Similar to the RRC idle state, in the RRC inactive state, only content paging (paging) of common search space can be received, and cell reselection can be performed. In addition, a principle of the cell reselection in the RRC inactive state is the same as that in the RRC idle state. A power consumption level similar to that in the RRC idle state may be obtained in the RRC inactive state because the terminal device in the RRC inactive state suspends data processing. If the terminal device moves in a same network device, the terminal device does not need to exchange information with the network device. However, if UE moves beyond a coverage of the network device, a radio access network notification area (RAN notification area, RNA) update process needs to be started. The UE in the RRC inactive state may have a low data transmission resume delay because the UE in the RRC inactive state can quickly transit to the RRC connected state by using an RRC resume (resume) process.

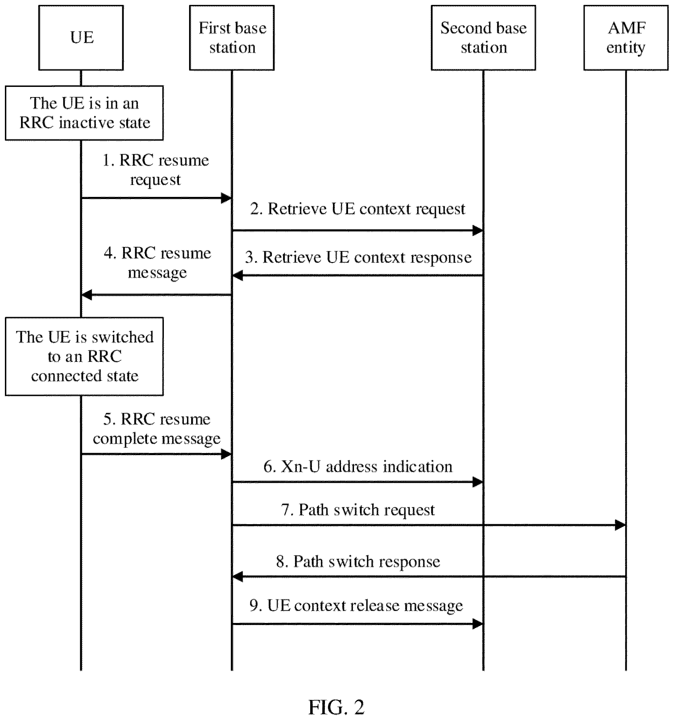

FIG. 2 is a diagram of resuming from an RRC inactive state to an RRC connected state. The following uses an example in which a terminal device is UE and a last serving gNB is a second base station for description. The second base station stores a context of the UE. The UE moves out of a coverage area of the second base station and enters a coverage area of a first base station, and initiates an RRC resume process.
1. The terminal device in an inactive state sends an RRC resume request (RRC resume request) to the first base station. The RRC resume request may carry an inactive radio network temporary identifier (inactive radio network temporary identity, I-RNTI).
2. The first base station sends a retrieve UE context request (retrieve UE context request) to the second base station. The retrieve UE context request may include the I-RNTI. The second base station may determine a context of the terminal device based on the I-RNTI.
3. The second base station sends a retrieve UE context response (retrieve UE context response) to the first base station. The retrieve UE context response includes the context of the UE.
4. The first base station sends an RRC resume (RRC resume) message to the terminal device. After receiving the RRC resume message, the UE enters the RRC connected state, and an RRC connection is resumed.
5. The UE sends an RRC resume complete (RRC resume complete) message to the first base station.
6. The first base station sends an Xn-U address indication (Xn-U address indication) to the second base station.
   The Xn-U address indication is used to notify the second base station of a tunnel address for data forwarding, and data is mainly downlink data. In this case, if the second base station has downlink data for the UE, the second base station may send the downlink data to the first base station, and then the first base station sends the downlink data to the UE.
7. The first base station sends a path switch request (path switch request) to an AMF entity. The path switch request is used to switch a path, to switch a connection between a UPF entity and the second base station to a connection between the UPF entity and the first base station. Subsequent downlink data is directly sent by the UPF entity to the first base station instead of the second base station.
8. The AMF entity sends a path switch response (path switch response) to the first base station.
9. The first base station sends a UE context release (UE context release) message to the second base station. The UE context release message is used to notify the second base station to release the context of the UE.

A signaling procedure for switching from an RRC idle state to the RRC connected state is an initial access procedure of the UE, including random access, RRC connection setup, and initial context setup. The signaling procedure is compared with a signaling procedure for switching from the RRC inactive state to the RRC connected state, and it is found that a large quantity of signaling interactions can be saved by using the RRC resume procedure in the RRC inactive state. For example, an RRC reconfiguration procedure and a security mode configuration procedure are reduced over a Uu interface, a context setup procedure, an authentication procedure, and the like are reduced over an NG interface. In this way, the UE in the RRC inactive state can access the network more quickly than the UE in the RRC idle state.

System information mainly includes an MIB and a plurality of SIBs. The SIB mainly includes an SIB 1 and another SIB. The SIB 1 mainly includes scheduling information of other system information and initial access information. The another SIB mainly includes the following information: (1) an SIB 2, including cell reselection information of a serving cell; (2) an SIB 3, including cell reselection information of a serving frequency and a neighboring cell having a same frequency; (3) an SIB 4, including reselection information of an inter-frequency cell; (4) an SIB 5, including cell reselection information of an E-UTRA frequency and a neighboring cell; (5) an SIB 6, including a major notification of an earthquake and tsunami warning system (earthquake and tsunami warning system, ETWS); (6) an SIB 7, including a secondary notification of the ETWS; (7) an SIB 8, including a warning notification of a commercial mobile alert system (commercial mobile alert system, CMAS); (8) an SIB 9, including information of a global positioning system (global positioning system, GPS) time and coordinated universal time (coordinated universal time, UTC); (9) an SIB 10, including human-readable network name (human-readable network name) information of a non-public network (non-public network, NPN); (10) an SIB 11, including measurement information of IDLE UE and INACTIVE UE; and (11) an SIBpos, including positioning assistance data.

For system information on demand, there are mainly the following manners: an MSG1-based SI request, an MSG3-based SI request, and a dedicated SI request.

### (1) MSG1-based SI

1. The terminal device sends a preamble sequence to a network device, where there is a correspondence between the preamble sequence and a requested SIB. 2. The terminal device receives a random access response. 3. The terminal device receives the requested SIB through broadcast.

### (2) MSG3-based SI

1. The terminal device sends a preamble sequence to a network device. 2. The terminal device receives a random access response. 3. The terminal device sends MSG3 to the network device, where the MSG3 indicates requested SIB information. 4. The terminal device receives contention resolution information. 5. The terminal device receives the requested SIB through broadcast.

### (3) Dedicated SI request

1. The terminal device sends a dedicated request to a network device. 2. The terminal device receives system information through unicast.

The dedicated SI request can be used to obtain system information of the UE in the RRC connected state and security verification is performed.

For the idle UE or the inactive UE, security verification is not performed when the foregoing system information is obtained. As a result, the terminal device obtains tampered system information, and a security risk exists. To resolve the foregoing technical problem, embodiments of this application provide the following solutions.

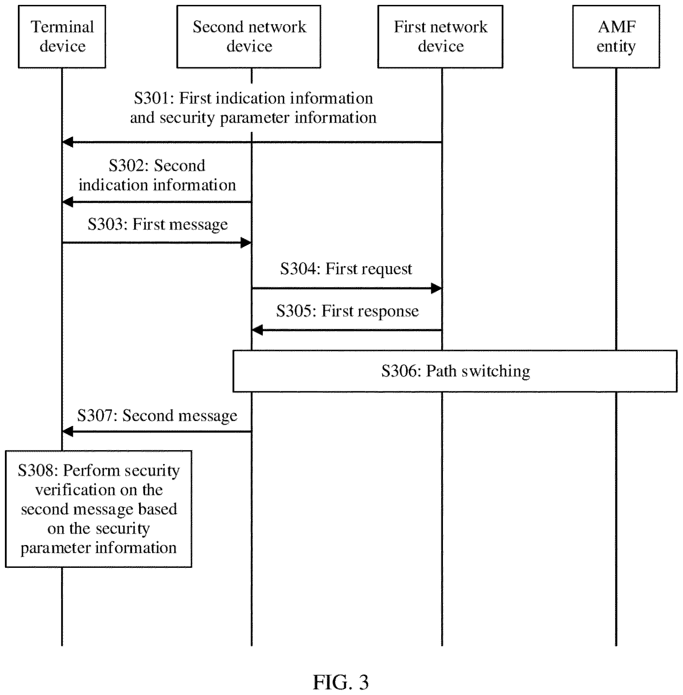

FIG. 3 is a schematic flowchart of a communication method according to an embodiment of this application. This embodiment of this application may include the following steps.

S301: A terminal device receives first indication information and security parameter information that are sent by a first network device, where the first indication information indicates that use of a security verification-based system information obtaining mechanism is allowed, and the security parameter information is used to perform security verification on system information.

Specifically, the first network device may obtain the security parameter information, and then send the first indication information and the security parameter information to the terminal device. After receiving the first indication information and the security parameter information, the terminal device may learn that use of the security verification-based system information obtaining mechanism is allowed. In addition, the terminal device may determine a security protection parameter based on the security parameter information. Subsequently, the terminal device may perform security verification on the received system information by using the security protection parameter. The security parameter information may be a next chaining counter (next chaining counter, NCC), and the NCC is used to identify a security key.

The first network device may be a last serving gNB (Last serving gNB) of the terminal device. The terminal device is currently in an RRC inactive state, and in the RRC inactive state, a dedicated RRC connection is suspended. The dedicated RRC connection may be a connection of a data radio bearer (data radio bearer, DRB) or a connection of a signaling radio bearer 1 (signaling radio bearer 1, SRB 1).

S302: The terminal device receives second indication information sent by a second network device, where the second indication information indicates that the second network device supports the security verification-based system information.

S303: The terminal device sends a first message to the second network device, where the first message is used to request security verification-based first system information.

The first message may be an RRC system information request (RRC system information request) message or a dedicated system information request (dedicated SIB request) message. The RRC system information request message is transmitted via an SRB 0, and the dedicated system information request message is transmitted via an SRB 1. The first system information may be an MIB or an SIB 1, and the SIB 1 may be used to transmit scheduling information of other system information. For example, the other system information may be system information on demand.

Optionally, the terminal device may send an RRC resume request (RRC resume request) to the second network device. The RRC resume request may include a cause value, and the cause value is that the terminal device requests the security verification-based first system information. The SRB 1 is established between the terminal device and the second network device through the RRC resume request. The RRC resume request is transmitted via the SRB 0.

The first message and the RRC resume request may be in a same message, for example, a random access message 3 (MSG3), or may be in different messages.

S304: The second network device sends a first request to the first network device.

The first request may include a cause value, and the cause value is that the terminal device requests the security verification-based first system information. After receiving the first request, the first network device may determine, based on the cause value, whether to perform anchor relocation (anchor relocation).

In this embodiment of this application, the first network device determines to perform anchor relocation. This embodiment of this application is applicable to a small data transmission (small data transmission, SDT) with anchor relocation (with anchor relocation) scenario.

The first request may be a retrieve UE context request (retrieve UE context request).

S305: The first network device sends a first response to the second network device.

The first response may include a context and the security protection parameter of the terminal device. The context of the terminal device may include a packet data convergence protocol (packet data convergence protocol, PDCP) configuration, a radio link control (radio link control, RLC) layer protocol configuration, a service data adaptation protocol (service data adaptation protocol, SDAP) configuration, and the like. The security protection parameter is determined by the first network device based on the security parameter information.

Optionally, the first response may further indicate to perform anchor relocation. For example, one field in the first response includes 1 bit, and when the bit is 1, anchor relocation is indicated to be performed.

The first response may be a retrieve UE context response (retrieve UE context response).

S306: The second network device and an AMF entity perform a path switch (path switch) process.

Specifically, the second network device may send an Xn-U address indication (Xn-U address indication) to the first network device. The Xn-U address indication is used to notify the first network device of a tunnel address for data forwarding. Then, the second network device sends a path switch request (path switch request) to the AMF entity. The path switch request is used to switch a path, to switch a connection between a UPF entity and the first network device to a connection between the UPF entity and the second network device. Subsequent downlink data is directly sent by the UPF entity to the second network device instead of the first network device. Finally, the AMF entity sends a path switch response (path switch response) to the second network device.

S307: The second network device determines to keep the terminal device in the RRC inactive state, encapsulates the first system information into a second message, and sends the second message to the terminal device.

The second message includes the first system information, and security protection is performed on the second message by using the received security protection parameter. The second message may be an RRC release (RRC release) message, and the second message is transmitted via the SRB 1.

S308: The terminal device performs security verification on the received second message based on the security protection parameter determined in step S301.

It should be noted that the security protection may be integrity protection, and the security verification may be integrity verification. The integrity protection may be understood as follows: The second network device obtains, through calculation, one or more bits based on the security protection parameter, and sends the one or more bits together with the second message to the terminal device, where the one or more bits protect integrity of the first message. The integrity verification may be understood as follows: The terminal device obtains, through calculation, one or more bits based on the security protection parameter. If the one or more bits obtained through calculation are the same as received one or more bits, the integrity verification succeeds, indicating that the received first system information is secure and is not tampered with.

Optionally, after sending the second message to the terminal device, the second network device may send a UE context release (UE context release) message to the first network device. The UE context release message is used to notify the first network device to release the context of the UE.

In this embodiment of this application, the terminal device in the RRC inactive state requests the system information from the network device by using the security verification-based system information obtaining mechanism. Because security protection is performed on the SRB 1 after the SRB 1 is resumed, the network device transmits, via the SRB 1, the system information on which security protection is performed, to prevent the terminal device from receiving tampered system information, thereby improving security of the system information. This embodiment of this application is applicable to an SDT with anchor relocation scenario.

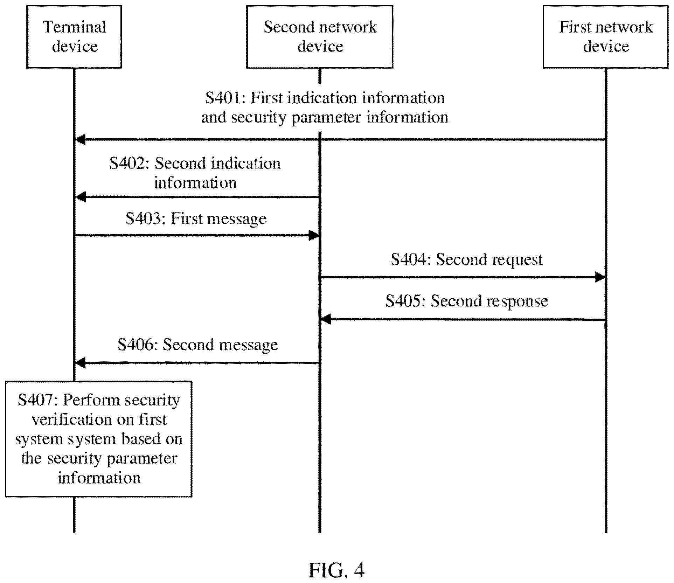

FIG. 4 is a schematic flowchart of a communication method according to an embodiment of this application. This embodiment of this application may include the following steps.

S401: A terminal device receives first indication information and security parameter information that are sent by a first network device, where the first indication information indicates that use of a security verification-based system information obtaining mechanism is allowed, and the security parameter information is used to perform security verification on system information.

Specifically, the first network device may obtain the security parameter information, and then send the first indication information and the security parameter information to the terminal device. After receiving the first indication information and the security parameter information, the terminal device may learn that use of the security verification-based system information obtaining mechanism is allowed. In addition, the terminal device may determine a security protection parameter based on the security parameter information. Subsequently, the terminal device may perform security verification on the received system information by using the security protection parameter. The security parameter information may be a next chaining counter (next chaining counter, NCC), and the NCC is used to identify a security key.

The first network device may be a last serving gNB (Last serving gNB) of the terminal device. The terminal device is currently in an RRC inactive state, and in the RRC inactive state, a dedicated RRC connection is suspended. The dedicated RRC connection may be a connection of a data radio bearer (data radio bearer, DRB) or a connection of a signaling radio bearer 1 (signaling radio bearer 1, SRB 1).

S402: The terminal device receives second indication information sent by a second network device, where the second indication information indicates that the second network device supports the security verification-based system information.

S403: The terminal device sends a first message to the second network device, where the first message is used to request security verification-based first system information.

The first message may be an RRC system information request (RRC system information request) message or a dedicated system information request (dedicated SIB request) message. The RRC system information request message is transmitted via an SRB 0, and the dedicated system information request message is transmitted via an SRB 1. The first system information may be an MIB or an SIB 1, and the SIB 1 may be used to transmit scheduling information of other system information. For example, the other system information may be system information on demand.

Optionally, the terminal device may send an RRC resume request (RRC resume request) to the second network device. The RRC resume request may include a cause value, and the cause value is that the terminal device requests the security verification-based first system information. The SRB 1 is established between the terminal device and the second network device through the RRC resume request. The RRC resume request is transmitted via the SRB 0.

The first message and the RRC resume request may be in a same message, for example, a random access message 3, or may be in different messages.

S404: The second network device sends a second request to the first network device.

The second request may include a cause value, and the cause value is that the terminal device requests the security verification-based first system information. After receiving the second request, the first network device may determine, based on the cause value, whether to perform anchor relocation (anchor relocation).

The second request further includes the first system information requested by the terminal device.

The first request may be a retrieve UE context request (retrieve UE context request).

In this embodiment of this application, the first network device determines not to perform anchor relocation. This embodiment of this application is applicable to an SDT without anchor relocation scenario.

S405: The first network device sends a second response to the second network device.

The second response may include a partial context of the terminal device and a second message. The second message includes the first system information on which security protection is performed. The partial context of the terminal device may include a radio link control layer protocol (radio link control, RLC) configuration and the like. The second message may be an RRC release (RRC release) message.

Specifically, the first network device determines the security protection parameter based on the security parameter information, and then performs security protection on the first system information by using the security protection parameter. Then, the first network device encapsulates the first system information on which security protection is performed into the second message or another message. The second message or the another message is transmitted via the SRB 1.

Optionally, the second response may further indicate not to perform anchor relocation. For example, one field in the second response includes 1 bit, and when the bit is 0, anchor relocation is indicated not to be performed.

The second response may be a retrieve UE context response (retrieve UE context response).

S406: The second network device determines to keep the terminal device in the RRC inactive state and sends the second message to the terminal device.

The second message includes the first system information, and security protection is performed on the first system information. The second message may be an RRC release (RRC release) message, and the second message is transmitted via the SRB 1.

S407: The terminal device performs security verification on the received first system information based on the security protection parameter determined in step S401. If the security verification succeeds, it indicates that the received first system information is secure.

Optionally, after sending the second message to the terminal device, the second network device may send a UE context release (UE context release) message to the first network device. The UE context release message is used to notify the first network device to release the context of the UE.

In this embodiment of this application, the terminal device in the RRC inactive state requests the system information from the network device by using the security verification-based system information obtaining mechanism. Because security protection is performed on the SRB 1 after the SRB 1 is resumed, the network device transmits, via the SRB 1, the system information on which security protection is performed, to prevent the terminal device from receiving tampered system information, thereby improving security of the system information.

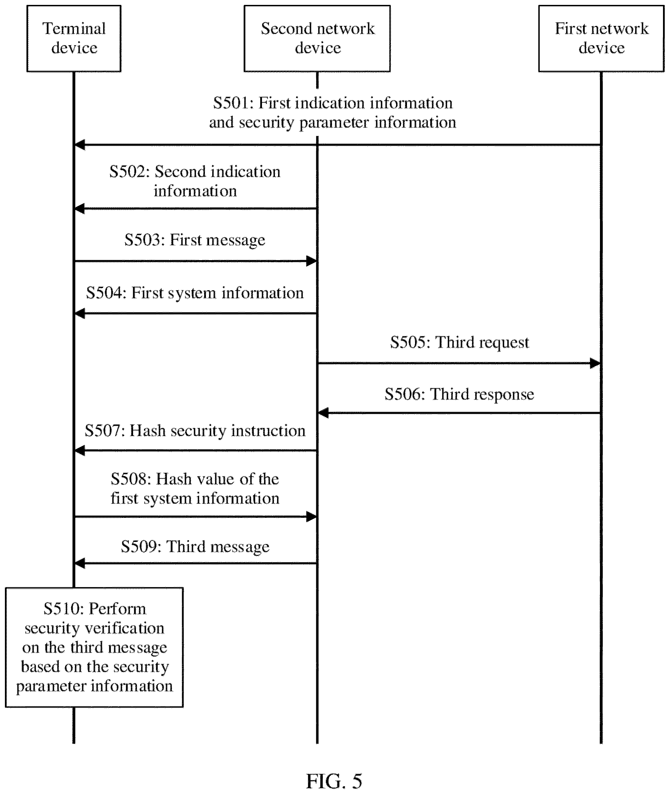

FIG. 5 is a schematic flowchart of a communication method according to an embodiment of this application. This embodiment of this application may include the following steps.

S501: A terminal device receives first indication information and security parameter information that are sent by a first network device, where the first indication information indicates that use of a security verification-based system information obtaining mechanism is allowed, and the security parameter information is used to perform security verification on system information.

Specifically, the first network device may obtain the security parameter information, and then send the first indication information and the security parameter information to the terminal device. After receiving the first indication information and the security parameter information, the terminal device may learn that use of the security verification-based system information obtaining mechanism is allowed. In addition, the terminal device may determine a security protection parameter based on the security parameter information. Subsequently, the terminal device may perform security verification on the received system information by using the security protection parameter. The security parameter information may be a next chaining counter (next chaining counter, NCC), and the NCC is used to identify a security key.

The first network device may be a last serving gNB (Last serving gNB) of the terminal device. The terminal device is currently in an RRC inactive state, and in the RRC inactive state, a dedicated RRC connection is suspended. The dedicated RRC connection may be a connection of a data radio bearer (data radio bearer, DRB) or a connection of a signaling radio bearer 1 (signaling radio bearer 1, SRB 1).

S502: The terminal device receives second indication information sent by a second network device, where the second indication information indicates that the second network device supports the security verification-based system information.

S503: The terminal device sends a first message to the second network device, where the first message is used to request security verification-based first system information.

The first message may be an RRC system information request (RRC system information request) message or a dedicated system information request (dedicated SIB request) message. The RRC system information request message is transmitted via an SRB 0, and the dedicated system information request message is transmitted via an SRB 1. The first system information may be an MIB or an SIB 1, and the SIB 1 may be used to transmit scheduling information of other system information. For example, the other system information may be system information on demand.

Optionally, the terminal device may send an RRC resume request (RRC resume request) to the second network device. The RRC resume request may include a cause value, and the cause value is that the terminal device requests the security verification-based first system information. The SRB 1 is established between the terminal device and the second network device through the RRC resume request. The RRC resume request is transmitted via the SRB 0.

The first message and the RRC resume request may be in a same message, for example, a random access message 3, or may be in different messages.

S504: The second network device sends the first system information to the terminal device, where security protection is not performed on the first system information.

S505: The second network device sends a third request to the first network device. The third request is used to request a hash parameter (hash key) of the security verification.

The third request may further include a cause value, and the cause value is that the terminal device requests the security verification-based first system information. After receiving the second request, the first network device may determine, based on the cause value, whether to perform anchor relocation (anchor relocation).

The third request may be a retrieve UE context request (retrieve UE context request).

In this embodiment of this application, the first network device determines not to perform anchor relocation. This embodiment of this application is applicable to an SDT without anchor relocation scenario.

S506: The second network device receives a third response sent by the first network device, where the third response includes a third message, and the third message includes the hash parameter.

The third response may further include a partial context of the terminal device. The partial context of the terminal device may include a radio link control layer protocol (radio link control, RLC) configuration and the like.

The third message may be an RRC release (RRC release) message. The third message is transmitted via the SRB 1.

Optionally, the third response may further indicate not to perform anchor relocation. For example, one field in the third response includes 1 bit, and when the bit is 1, anchor relocation is indicated to be performed.

S507: The second network device sends a hash security instruction to the terminal device, where the hash security instruction includes a hash parameter, and the hash parameter is used to determine a hash value of the first system information.

Optionally, after receiving the hash security instruction, the terminal device determines the hash value of the first system information based on the hash parameter.

The hash security instruction is transmitted via the SRB 1.

S508: The terminal device sends the hash value of the first system information to the second network device, where the hash value of the first system information is used to determine whether the first system information received by the terminal device is tampered with.

Optionally, after receiving the hash value of the first system information, the second network device calculates the hash value of the first system information based on the received hash parameter of the first network device, and compares the obtained, through calculation, hash value of the first system information with the received hash value that is of the first system information and that is obtained, through calculation, by the terminal device. If the two are the same, it is determined that the first system information received by the terminal device is not tampered with; or if the two are different, it is determined that the first system information received by the terminal device is tampered with.

The hash value of the first system information is transmitted via the SRB 1.

S509: The second network device sends a third message to the terminal device, where security protection is performed on the third message.

The third message includes third indication information, and the third indication information indicates whether the first system information received by the terminal device is tampered with. For example, the first indication information may be 1 bit. If the bit is 1, it is determined that the first system information received by the terminal device is tampered with; or if the bit is 0, it is determined that the first system information received by the terminal device is not tampered with.

Optionally, when the first system information received by the terminal device is tampered with, the third message includes the first system information that is not tampered with.

S510: The terminal device performs security verification on the third message based on the security protection parameter determined in step S501. If the security verification succeeds, it indicates that the received first system information is secure.

Optionally, after sending the second message to the terminal device, the second network device may send a UE context release (UE context release) message to the first network device. The UE context release message is used to notify the first network device to release the context of the UE.

In this embodiment of this application, the terminal device in the RRC inactive state requests the system information from the network device by using the security verification-based system information obtaining mechanism. Because security protection is performed on the SRB 1 after the SRB 1 is resumed, the network device transmits the hash parameter via the SIB 1, to perform security verification on the system information, to prevent the terminal device from receiving tampered system information, thereby improving security of the system information.

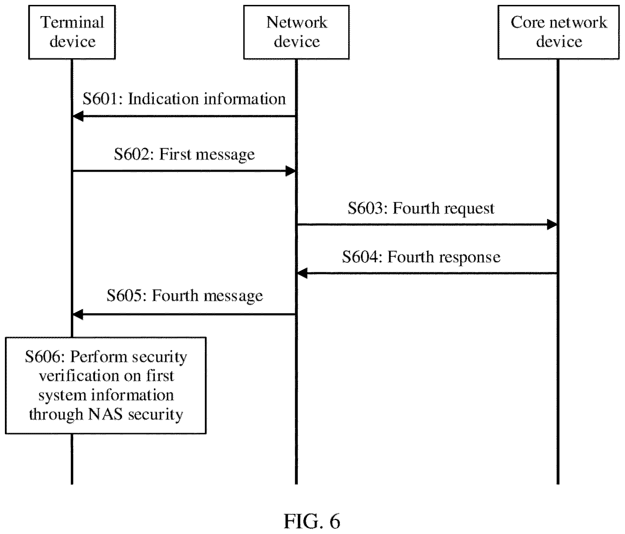

FIG. 6 is a schematic flowchart of a communication method according to an embodiment of this application. This embodiment of this application may include the following steps.

S601: A terminal device receives indication information sent by a network device, where the indication information indicates that the network device supports security verification-based system information, and the system information can be transmitted via SDT.

S602: The terminal device sends a first message to the network device, where the first message is used to request security verification-based first system information.

The first message may be an RRC system information request (RRC system information request) message or a dedicated system information request (dedicated SIB request) message. The RRC system information request message is transmitted via an SRB 0, and the dedicated system information request message is transmitted via an SRB 1. The first system information may be an MIB or an SIB 1, and the SIB 1 may be used to transmit scheduling information of other system information. For example, the other system information may be system information on demand.

Optionally, the terminal device may send an RRC small data transmission request (RRC SDT request) to the network device. The RRC SDT request may include a cause value, and the cause value is that the terminal device requests the security verification-based first system information. The RRC SDT request is transmitted via an SRB 0.

The first message and the RRC small data transmission request may be in a same message, for example, a random access message 3, or may be in different messages.

The first system information may be an MIB or an SIB 1, and the SIB 1 may be used to transmit scheduling information of other system information. For example, the other system information may be system information on demand.

S603: The network device sends a fourth request to a core network device, where the fourth request includes the first system information requested by the terminal device.

The fourth request may be a small data transmission uplink non-access stratum message transfer (SDT UL NAS message transfer) message. The core network device may include an AMF entity, a security anchor function (security anchor function, SEAF) entity, and the like.

S604: The core network device performs NAS security protection on the first system information, and sends a fourth response to the network device.

The fourth response includes the first system information on which NAS security protection is performed. The fourth response may be a small data transmission downlink non-access stratum message transfer (SDT DL NAS message transfer) message.

S605: The network device sends a fourth message to the terminal device.

The fourth message may be an RRC small data transmission response (RRC SDT response). The RRC SDT response may include the first system information on which NAS security protection is performed. The first system information on which NAS security protection is performed is included in the SDT DL NAS message transfer message.

S606: The terminal device performs security verification on the received first system information through NAS security.

In embodiments of this application, for an RRC idle terminal device, the network device transmits system information by using a NAS message, and the terminal device performs security verification on the system information by using a NAS security mechanism, so that the terminal device is prevented from receiving tampered system information, and security of the system information is improved.

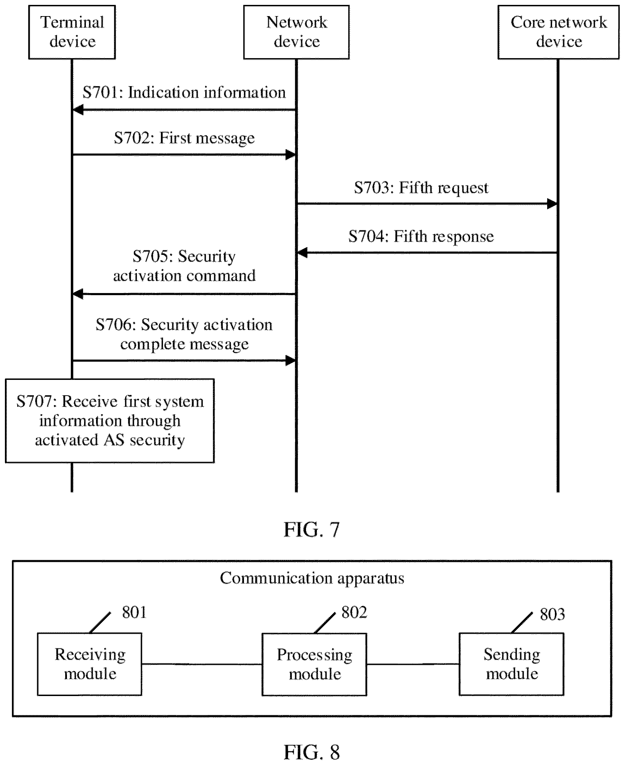

FIG. 7 is a schematic flowchart of a communication method according to an embodiment of this application. This embodiment of this application may include the following steps.

S701: A terminal device receives indication information sent by a network device, where the indication information indicates that the network device supports security verification-based system information, and the system information can be transmitted via SDT.

S702: The terminal device sends a first message to the network device, where the first message is used to request security verification-based first system information.

The first message may be an RRC system information request (RRC system information request) message or a dedicated system information request (dedicated SIB request) message. The RRC system information request message is transmitted via an SRB 0, and the dedicated system information request message is transmitted via an SRB 1. The first system information may be an MIB or an SIB 1, and the SIB 1 may be used to transmit scheduling information of other system information. For example, the other system information may be system information on demand.

Optionally, the terminal device may send an RRC small data transmission request (RRC SDT request) to the network device. The RRC SDT request may include a cause value, and the cause value is that the terminal device requests the security verification-based first system information. The RRC SDT request is transmitted via an SRB 0.

The first message and the RRC small data transmission request may be in a same message, for example, a random access message 3, or may be in different messages.

The first system information may be an MIB or an SIB 1, and the SIB 1 may be used to transmit scheduling information of other system information. For example, the other system information may be system information on demand.

S703: The network device sends a fifth request to a core network device. The fifth request may include a cause value, and the cause value is that the terminal device requests the security verification-based first system information.

The fifth request may be a small data transmission uplink non-access stratum message transfer (SDT UL NAS message transfer) message. The core network device may include an AMF entity, a security anchor function (security anchor function, SEAF) entity, and the like.

S704: The core network device sends a fifth response to the network device.

The fifth response may be an access stratum (access stratum, AS) security activation command.

S705: The network device sends the security activation command to the terminal device.

S706: The terminal device activates AS security based on the AS security activation command. After completing AS security activation, the terminal device may send a security activation complete message to the network device. The security activation complete message is used to notify that AS security activation is completed.

S707: The terminal device receives the first system information through the activated AS security.

In embodiments of this application, for an RRC idle terminal device, AS security is not activated, and the terminal device may request a NAS to activate the AS security. The network device performs security protection on the system information through the AS security, and the terminal device performs security verification on the system information through the activated AS security, so that the terminal device is prevented from receiving tampered system information, and security of the system information is improved.

It may be understood that the methods and operations implemented by the terminal device in the foregoing method embodiments may alternatively be implemented by a component (for example, a chip or a circuit) that can be used in the terminal device, and the methods and operations implemented by the network device may alternatively be implemented by a component (for example, a chip or a circuit) that can be used in the network device.

The foregoing mainly describes the solutions provided in embodiments of this application from a perspective of interactions. It may be understood that, to implement the foregoing functions, each network element, for example, a transmit end device or a receive end device, includes a corresponding hardware structure and/or a corresponding software module for performing each function. A person skilled in the art should be aware that, in combination with the examples described in embodiments disclosed in this specification, units, algorithms, and steps may be implemented by hardware or a combination of hardware and computer software in this application. Whether a function is performed by hardware or computer software driving hardware depends on a specific application and a design constraint condition of the technical solution. A person skilled in the art may use different methods to implement the described functions for each particular application, but it should not be considered that the implementation goes beyond the scope of this application.

In embodiments of this application, the terminal device or the network device may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that the module division in embodiments of this application is an example, and is merely logical function division. In actual implementation, there may be another division manner. An example in which each functional module is obtained through division based on each corresponding function is used below for description.

The methods provided in embodiments of this application are described above in detail with reference to FIG. 3 to FIG. 7. Communication apparatuses provided in embodiments of this application are described in detail below with reference to FIG. 8 to FIG. 10. It should be understood that descriptions of the apparatus embodiments correspond to descriptions of the method embodiments. Therefore, for content that is not described in detail, refer to the foregoing method embodiments. For brevity, details are not described herein again.

FIG. 8 is a diagram of a structure of a communication apparatus according to an embodiment of this application. The communication apparatus may include a receiving module 801, a processing module 802, and a sending module 803. The receiving module 801 and the sending module 803 may communicate with the outside, and the processing module 802 is configured to perform processing, for example, perform security verification. The receiving module 801 and the sending module 803 may also be referred to as communication interfaces, transceiver units, or transceiver modules. The receiving module 801 and the sending module 803 may be configured to perform actions performed by the terminal device in the foregoing method embodiments.

For example, the receiving module 801 and the sending module 803 may also be referred to as transceiver modules or transceiver units (including a receiving unit and/or a sending unit), and are separately configured to perform sending and receiving steps of the terminal device in the foregoing method embodiments.

In a possible design, the communication apparatus may implement steps or procedures corresponding to the terminal device in the foregoing method embodiments. For example, the communication apparatus may be the terminal device, or a chip or a circuit configured in the terminal device. The receiving module 801 and the sending module 803 are configured to perform receiving/sending related operations on a terminal device side in the foregoing method embodiments, and the processing module 802 is configured to perform processing related operations of the terminal device in the foregoing method embodiments.

The receiving module 801 is configured to receive first indication information and security parameter information that are sent by a first network device, where the first indication information indicates that use of a security verification-based system information obtaining mechanism is allowed, and the security parameter information is used to perform security verification on system information.

The sending module 803 is configured to send a first message to a second network device, where the first message is used to request security verification-based first system information.

Optionally, the receiving module 801 is further configured to receive second indication information of the second network device, where the second indication information indicates that the second network device supports the security verification-based system information.

Optionally, the first message is a radio resource control RRC system information request message or a dedicated system information request message.

Optionally, the receiving module 801 is further configured to receive a second message sent by the second network device, where the second message includes the first system information, and security protection is performed on the second message.

The processing module 802 is configured to perform security verification on the second message based on the security parameter information.

Optionally, the receiving module 801 is further configured to receive the first system information sent by the second network device, where security protection is not performed on the first system information.

Optionally, the receiving module 801 is further configured to receive a hash security instruction sent by the second network device, where the hash security instruction includes a hash parameter, and the hash parameter is used to determine a hash value of the first system information.

The sending module 803 is further configured to send the hash value of the first system information to the second network device, where the hash value of the first system information is used to determine whether the first system information received by the terminal device is tampered with.

Optionally, the receiving module 801 is further configured to receive a third message sent by the second network device, where security protection is performed on the third message.

The processing module 802 is configured to perform security verification on the third message based on a security protection parameter.

Optionally, the third message includes third indication information, and the third indication information indicates whether the first system information received by the terminal device is tampered with.

Optionally, when the first system information received by the terminal device is tampered with, the third message includes the first system information that is not tampered with.

It should be noted that for implementation of the modules, refer to corresponding descriptions in the method embodiments shown in FIG. 3 to FIG. 7, to perform the methods and functions performed by the terminal device in the foregoing embodiments.

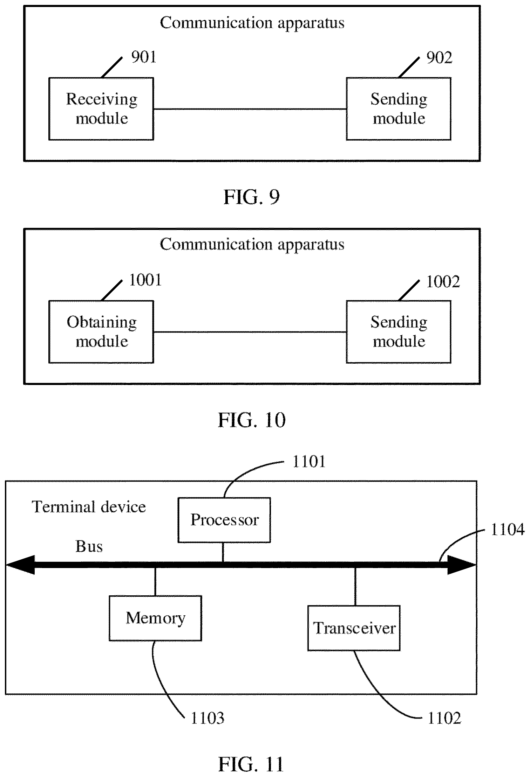

FIG. 9 is a diagram of a structure of a communication apparatus according to an embodiment of this application. The communication apparatus may include a receiving module 901 and a sending module 902. The receiving module 901 and the sending module 902 may communicate with the outside. The receiving module 901 and the sending module 902 may also be referred to as communication interfaces, transceiver modules, or transceiver units. The receiving module 901 and the sending module 902 may be configured to perform actions performed by the second network device in the foregoing method embodiments.

For example, the receiving module 901 and the sending module 902 may also be referred to as transceiver modules or transceiver units (including a sending unit and/or a receiving unit), and are separately configured to perform sending and receiving steps of the second network device in the foregoing method embodiments.

In a possible design, the communication apparatus may implement steps or procedures corresponding to the second network device in the foregoing method embodiments. For example, the communication apparatus may be the second network device, or a chip or a circuit configured in the second network device. The receiving module 901 and the sending module 902 may be configured to perform receiving/sending related operations of the second network device in the foregoing method embodiments.

The receiving module 901 is configured to receive a first message sent by a terminal device, where the first message is used to request security verification-based first system information.

The sending module 902 is configured to send the first system information to the terminal device.

Optionally, the sending module 902 is further configured to send second indication information to the terminal device, where the second indication information indicates that a second network device supports the security verification-based system information.

Optionally, the first message is a radio resource control RRC system information request message or a dedicated system information request message.

Optionally, the first system information is included in a second message, and security protection is performed on the second message.

Optionally, the sending module 902 is further configured to send a first request to a first network device; and the receiving module 901 is further configured to receive a first response sent by the first network device, where the first response includes a security protection parameter, the security protection parameter is determined based on security parameter information, and the security protection parameter is used to perform security protection on the second message.

Optionally, the first request includes a cause value, the cause value is that the terminal device requests the security verification-based first system information, and the cause value indicates the first network device to determine whether to perform anchor relocation.

Optionally, the first response further indicates to perform anchor relocation.

Optionally, the sending module 902 is further configured to send a second request to a first network device, where the second request includes the first system information.

The receiving module 901 is further configured to receive a second response sent by the first network device, where the second response includes the second message, the second message includes the first system information, and security protection is performed on the second message.

Optionally, the second request includes a cause value, the cause value is that the terminal device requests the security verification-based first system information, and the cause value indicates the first network device to determine whether to perform anchor relocation.

Optionally, the second response further indicates not to perform anchor relocation.

Optionally, security protection is not performed on the first system information.

Optionally, the sending module 902 is further configured to send a third request to a first network device, where the third request is used to request a hash parameter of the security verification.

The receiving module 901 is further configured to receive a third response sent by the first network device, where the third response includes a third message, and the third message includes the hash parameter.

Optionally, the third request includes a cause value, the cause value is that the terminal device requests the security verification-based first system information, and the cause value indicates the first network device to determine whether to perform anchor relocation.

Optionally, the third response further indicates not to perform anchor relocation.

Optionally, the sending module 902 is configured to send a hash security instruction to the terminal device, where the hash security instruction includes the hash parameter, and the hash parameter is used to determine a hash value of the first system information.

The receiving module 901 is further configured to receive the hash value that is of the first system information and that is sent by the terminal device, where the hash value of the first system information is used to determine whether the first system information received by the terminal device is tampered with.

Optionally, the sending module 902 is configured to send the third message to the terminal device, where security protection is performed on the third message.

Optionally, the third message includes third indication information, and the third indication information indicates whether the first system information received by the terminal device is tampered with.

Optionally, when the first system information received by the terminal device is tampered with, the third message includes the first system information that is not tampered with.

It should be noted that for implementation of the modules, refer to corresponding descriptions in the method embodiments shown in FIG. 3 to FIG. 7, to perform the methods and functions performed by the second network device or the network device in the foregoing embodiments.

FIG. 10 is a diagram of a structure of a communication apparatus according to an embodiment of this application. The communication apparatus may include an obtaining module 1001 and a sending module 1002. The obtaining module 1001 and the sending module 1002 may communicate with the outside. The obtaining module 1001 and the sending module 1002 may also be referred to as communication interfaces, transceiver modules, or transceiver units. The obtaining module 1001 and the sending module 1002 may be configured to perform actions performed by the first network device in the foregoing method embodiments.

For example, the obtaining module 1001 and the sending module 1002 may also be referred to as transceiver modules or transceiver units (including a sending unit and/or a receiving unit), and are separately configured to perform sending and receiving steps of the first network device in the foregoing method embodiments.

In a possible design, the communication apparatus may implement steps or procedures corresponding to the first network device in the foregoing method embodiments. For example, the communication apparatus may be the first network device, or a chip or a circuit configured in the first network device. The obtaining module 1001 and the sending module 1002 may be configured to perform receiving/sending related operations of the first network device in the foregoing method embodiments.

The obtaining module 1001 is configured to obtain security parameter information.

The sending module 1002 is configured to send first indication information and the security parameter information to a terminal device, where the first indication information indicates that use of a security verification-based system information obtaining mechanism is allowed, and the security parameter information is used to perform security verification on system information.

Optionally, the obtaining module 1001 is further configured to receive a first request sent by a second network device.

The sending module 1002 is further configured to send a first response to the second network device, where the first response includes a security protection parameter, the security protection parameter is determined based on the security parameter information, and the security protection parameter is used to perform security protection on the system information.

Optionally, the first request includes a cause value, the cause value is that the terminal device requests the security verification-based first system information, and the cause value indicates the first network device to determine whether to perform anchor relocation.

Optionally, the first response further indicates to perform anchor relocation.

Optionally, the obtaining module 1001 is further configured to receive a second request sent by the second network device, where the second request includes the first system information.

The sending module 1002 is further configured to send a second response to the second network device, where the second response includes a second message, the second message includes the first system information, and security protection is performed on the second message based on the security parameter information.

Optionally, the second request includes a cause value, the cause value is that the terminal device requests the security verification-based first system information, and the cause value indicates the first network device to determine whether to perform anchor relocation.

Optionally, the second response further indicates not to perform anchor relocation.

Optionally, the obtaining module 1001 is further configured to receive a third request sent by the second network device, where the third request includes requesting a hash parameter of the security verification.

The sending module 1002 is further configured to send a third response to the second network device, where the third response includes a third message, and the third message includes the hash parameter.

Optionally, the third request includes a cause value, the cause value is that the terminal device requests the security verification-based first system information, and the cause value indicates the first network device to determine whether to perform anchor relocation.

Optionally, the third response further indicates not to perform anchor relocation.

It should be noted that for implementation of the modules, refer to corresponding descriptions in the method embodiments shown in FIG. 3 to FIG. 7, to perform the methods and functions performed by the first network device or the network device in the foregoing embodiments.

FIG. 11 is a diagram of a structure of a terminal device according to an embodiment of this application. The terminal device may be applied to the systems shown in FIG. 1(A) and FIG. 1(B), to perform functions of the terminal device in the foregoing method embodiments, or implement steps or procedures performed by the terminal device in the foregoing method embodiments.

As shown in FIG. 11, the terminal device includes a processor 1101 and a transceiver 1102. Optionally, the terminal device further includes a memory 1103. The processor 1101, the transceiver 1102, and the memory 1103 may communicate with each other by using an internal connection path, to transmit a control signal and/or a data signal. The memory 1103 is configured to store a computer program. The processor 1101 is configured to invoke the computer program from the memory 1103 and run the computer program, to control the transceiver 1102 to receive and send a signal. Optionally, the terminal device may further include an antenna, configured to send, by using a radio signal, uplink data or uplink control signaling output by the transceiver 1102.

The processor 1101 and the memory 1103 may be combined into one processing apparatus. The processor 1101 is configured to execute program code stored in the memory 1103 to implement the foregoing functions. During specific implementation, the memory 1103 may alternatively be integrated into the processor 1101, or may be independent of the processor 1101. The processor 1101 may correspond to the processing module in FIG. 8.

The transceiver 1102 may correspond to the receiving module and the sending module in FIG. 8, and may also be referred to as a transceiver unit or a transceiver module. The transceiver 1102 may include a receiver (or referred to as a receiver device or a receiver circuit) and a transmitter (or referred to as a transmitter device or a transmitter circuit). The receiver is configured to receive a signal, and the transmitter is configured to transmit a signal.

It should be understood that the terminal device shown in FIG. 11 can implement processes related to the terminal device in the method embodiments shown in FIG. 3 to FIG. 7. Operations and/or functions of the modules in the terminal device are separately used to implement corresponding procedures in the foregoing method embodiments. For details, refer to the descriptions in the foregoing method embodiments. To avoid repetition, detailed descriptions are properly omitted herein.

The processor 1101 may be configured to perform an action that is implemented inside the terminal device and that is described in the foregoing method embodiments, and the transceiver 1102 may be configured to perform an action that is sent by the terminal device to the network device or received from the network device and that is described in the foregoing method embodiments. For details, refer to the descriptions in the foregoing method embodiments. Details are not described herein again.

The processor 1101 may be a central processing unit, a general-purpose processor, a digital signal processor, an application-specific integrated circuit, a field programmable gate array or another programmable logic device, a transistor logic device, a hardware component, or any combination thereof. The processor 1101 may implement or execute various example logical blocks, modules, and circuits described with reference to content disclosed in this application. Alternatively, the processor 1101 may be a combination of processors implementing a computing function, for example, a combination including one or more microprocessors, or a combination of a digital signal processor and a microprocessor. The communication bus 1104 may be a peripheral component interconnect standard PCI bus, an extended industry standard structure EISA bus, or the like. The bus may be classified into an address bus, a data bus, a control bus, and the like. For ease of representation, only one thick line is used to represent the bus in FIG. 11, but this does not mean that there is only one bus or only one type of bus. The communication bus 1104 is configured to implement connection and communication between these components. The transceiver 1102 in embodiments of this application is configured to perform signaling or data communication with another node device. The memory 1103 may include a volatile memory, for example, a nonvolatile dynamic random access memory (nonvolatile random access memory, NVRAM), a phase change random access memory (phase change RAM, PRAM), a magnetoresistive random access memory (magnetoresistive RAM, MRAM), or the like, and may further include a nonvolatile memory, for example, at least one magnetic disk storage, an electrically erasable programmable read-only memory (electrically erasable programmable read-only memory, EEPROM), a flash memory like a NOR flash memory (NOR flash memory) or a NAND flash memory (NAND flash memory), or a semiconductor device like a solid state disk (solid state disk, SSD). Optionally, the memory 1103 may be at least one storage apparatus located far away from the processor 1101. Optionally, the memory 1103 may further store a group of computer program code or configuration information. Optionally, the processor 1101 may further execute the program stored in the memory 1103. The processor may cooperate with the memory and the transceiver to perform any method and function of the terminal device in the foregoing embodiments of this application.

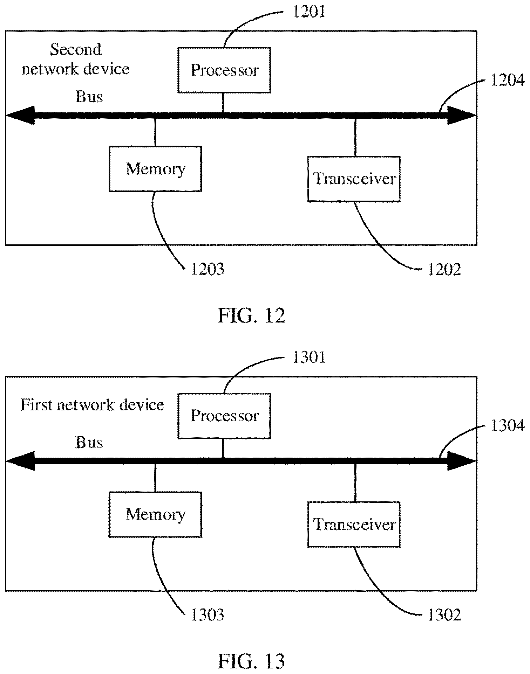

FIG. 12 is a diagram of a structure of a second network device according to an embodiment of this application. The second network device may be applied to the systems shown in FIG. 1(A) and FIG. 1(B), to perform functions of the second network device in the foregoing method embodiments, or implement steps or procedures performed by the second network device in the foregoing method embodiments.

As shown in FIG. 12, the second network device includes a processor 1201 and a transceiver 1202. Optionally, the second network device further includes a memory 1203. The processor 1201, the transceiver 1202, and the memory 1203 may communicate with each other by using an internal connection path, to transmit a control signal and/or a data signal. The memory 1203 is configured to store a computer program. The processor 1201 is configured to invoke the computer program from the memory 1203 and run the computer program, to control the transceiver 1202 to receive and send a signal. Optionally, the second network device may further include an antenna, configured to send, by using a radio signal, uplink data or uplink control signaling output by the transceiver 1202.

The processor 1201 and the memory 1203 may be combined into one processing apparatus. The processor 1201 is configured to execute program code stored in the memory 1203 to implement the foregoing functions. During specific implementation, the memory 1203 may alternatively be integrated into the processor 1201, or may be independent of the processor 1201.

The transceiver 1202 may correspond to the receiving module and the sending module in FIG. 9, and may also be referred to as a transceiver unit or a transceiver module. The transceiver 1202 may include a receiver (or referred to as a receiver device or a receiver circuit) and a transmitter (or referred to as a transmitter device or a transmitter circuit). The receiver is configured to receive a signal, and the transmitter is configured to transmit a signal.

It should be understood that the second network device shown in FIG. 12 can implement the processes related to the second network device in the method embodiments shown in FIG. 3 to FIG. 5, and implement the processes related to the network device in the method embodiments shown in FIG. 6 to FIG. 7. Operations and/or functions of the modules in the second network device are separately used to implement corresponding procedures in the foregoing method embodiments. For details, refer to the descriptions in the foregoing method embodiments. To avoid repetition, detailed descriptions are properly omitted herein.

The processor 1201 may be configured to perform an action that is implemented inside the second network device and that is described in the foregoing method embodiments, and the transceiver 1202 may be configured to perform an action that is sent by the second network device to the terminal device or received from the terminal device and that is described in the foregoing method embodiments. For details, refer to the descriptions in the foregoing method embodiments. Details are not described herein again.

The processor 1201 may be various types of processors mentioned above. The communication bus 1204 may be a peripheral component interconnect standard PCI bus, an extended industry standard structure EISA bus, or the like. The bus may be classified into an address bus, a data bus, a control bus, and the like. For ease of representation, only one thick line is used to represent the bus in FIG. 12, but this does not mean that there is only one bus or only one type of bus. The communication bus 1204 is configured to implement connection and communication between these components. The transceiver 1202 of the device in embodiments of this application is configured to perform signaling or data communication with another node device. The memory 1203 may be various types of memories mentioned above. Optionally, the memory 1203 may be at least one storage apparatus located far away from the processor 1201. The memory 1203 stores a group of computer program code or configuration information, and the processor 1201 executes a program in the memory 1203. The processor may cooperate with the memory and the transceiver to perform any method and function of the second network device in the foregoing embodiments of this application.

FIG. 13 is a diagram of a structure of a first network device according to an embodiment of this application. The first network device may be applied to the systems shown in FIG. 1(A) and FIG. 1(B), to perform functions of the first network device in the foregoing method embodiments, or implement steps or procedures performed by the first network device in the foregoing method embodiments.

As shown in FIG. 13, the first network device includes a processor 1301 and a transceiver 1302. Optionally, the first network device further includes a memory 1303. The processor 1301, the transceiver 1302, and the memory 1303 may communicate with each other by using an internal connection path, to transmit a control signal and/or a data signal. The memory 1303 is configured to store a computer program. The processor 1301 is configured to invoke the computer program from the memory 1303 and run the computer program, to control the transceiver 1302 to receive and send a signal. Optionally, the first network device may further include an antenna, configured to send, by using a radio signal, uplink data or uplink control signaling output by the transceiver 1302.

The processor 1301 and the memory 1303 may be combined into one processing apparatus. The processor 1301 is configured to execute program code stored in the memory 1303 to implement the foregoing functions. During specific implementation, the memory 1303 may alternatively be integrated into the processor 1301, or may be independent of the processor 1301.

The transceiver 1302 may correspond to the obtaining module and the sending module in FIG. 10, and may also be referred to as a transceiver unit or a transceiver module. The transceiver 1302 may include a receiver (or referred to as a receiver device or a receiver circuit) and a transmitter (or referred to as a transmitter device or a transmitter circuit). The receiver is configured to receive a signal, and the transmitter is configured to transmit a signal.

It should be understood that the first network device shown in FIG. 13 can implement the processes related to the first network device in the method embodiments shown in FIG. 3 to FIG. 5, and implement the processes related to the network device in the method embodiments shown in FIG. 6 to FIG. 7. Operations and/or functions of the modules in the first network device are separately used to implement corresponding procedures in the foregoing method embodiments. For details, refer to the descriptions in the foregoing method embodiments. To avoid repetition, detailed descriptions are properly omitted herein.

The processor 1301 may be configured to perform an action that is implemented inside the first network device and that is described in the foregoing method embodiments, and the transceiver 1302 may be configured to perform an action that is sent by the first network device to the terminal device or received from the terminal device and that is described in the foregoing method embodiments. For details, refer to the descriptions in the foregoing method embodiments. Details are not described herein again.

The processor 1301 may be various types of processors mentioned above. The communication bus 1304 may be a peripheral component interconnect standard PCI bus, an extended industry standard structure EISA bus, or the like. The bus may be classified into an address bus, a data bus, a control bus, and the like. For ease of representation, only one thick line is used to represent the bus in FIG. 13, but this does not mean that there is only one bus or only one type of bus. The communication bus 1304 is configured to implement connection and communication between these components. The transceiver 1302 of the device in embodiments of this application is configured to perform signaling or data communication with another node device. The memory 1303 may be various types of memories mentioned above. Optionally, the memory 1303 may be at least one storage apparatus located far away from the processor 1301. The memory 1303 stores a group of computer program code or configuration information, and the processor 1301 executes a program in the memory 1303. The processor may cooperate with the memory and the transceiver to perform any method and function of the first network device in the foregoing embodiments of this application.

An embodiment of this application further provides a chip system. The chip system includes a processor, configured to support a terminal device or a network device in implementing a function in any one of the foregoing embodiments, for example, generating or processing SDT data in the foregoing methods. In a possible design, the chip system may further include a memory. The memory is used for program instructions and data that are necessary for the terminal device or the network device. The chip system may include a chip, or may include a chip and another discrete component. Input and output of the chip system respectively correspond to receiving and sending operations of the terminal device or the network device in the method embodiments.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

In an implementation process, steps in the foregoing methods can be implemented by using a hardware integrated logic circuit in the processor, or by using instructions in a form of software. The steps of the methods disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. The steps of the methods disclosed with reference to embodiments of this application may be directly performed by a hardware decoding processor, or may be performed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

According to the method provided in embodiments of this application, this application further provides a computer program product. The computer program product includes a computer program. When the computer program runs on a computer, the computer performs the method in any one of the embodiments shown in FIG. 3 to FIG. 7.

According to the method provided in embodiments of this application, this application further provides a computer-readable medium. The computer-readable medium stores a computer program. When the computer program runs on a computer, the computer performs the method in any one of embodiments shown in FIG. 3 to FIG. 7.

According to the methods provided in embodiments of this application, this application further provides a communication system, including the foregoing one or more terminal devices and one or more network devices.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

The network device and the terminal device in the foregoing apparatus embodiments correspond to the network device or the terminal device in the method embodiments, and corresponding modules or units perform corresponding steps. For example, a receiving module and a sending module (transceiver) perform receiving or sending steps in the method embodiments, and steps other than sending and receiving may be performed by the processing module (processor). For a function of a specific module, refer to a corresponding method embodiment. There may be one or more processors.

The terms "component", "module", and "system" and the like used in this specification indicate computer-related entities, hardware, firmware, combinations of hardware and software, software, or software being executed. For example, the component may be but is not limited to a process that is run on a processor, a processor, an object, an executable file, an execution thread, a program, and/or a computer. As shown in the figures, both a computing device and an application that runs on the computing device may be components. One or more components may reside within the process and/or the execution thread, and the component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network, for example, the Internet interacting with other systems by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules are integrated into one module.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device, and the method comprises:
receiving first indication information and security parameter information that are sent by a first network device, wherein the first indication information indicates that use of a security verification-based system information obtaining mechanism is allowed, and the security parameter information is used to perform security verification on system information; and
sending a first message to a second network device, wherein the first message is used to request security verification-based first system information.

2. The method according to claim 1, wherein the method further comprises:
receiving second indication information of the second network device, wherein the second indication information indicates that the second network device supports the security verification-based system information.

3. The method according to claim 1 or 2, wherein the first message is a radio resource control RRC system information request message or a dedicated system information request message.

4. The method according to any one of claims 1 to 3, wherein the method further comprises:
receiving a second message sent by the second network device, wherein the second message comprises the first system information, and security protection is performed on the second message; and
performing security verification on the second message based on the security parameter information.

5. The method according to any one of claims 1 to 3, wherein the method further comprises:
receiving the first system information sent by the second network device, wherein security protection is not performed on the first system information.

6. The method according to claim 5, wherein after the terminal device receives the first system information sent by the second network device, the method further comprises:
receiving a hash security instruction sent by the second network device, wherein the hash security instruction comprises a hash parameter, and the hash parameter is used to determine a hash value of the first system information; and
sending the hash value of the first system information to the second network device, wherein the hash value of the first system information is used to determine whether the first system information received by the terminal device is tampered with.

7. The method according to claim 5 or 6, wherein the method further comprises:
receiving a third message sent by the second network device, wherein security protection is performed on the third message; and
performing security verification on the third message based on the security protection parameter.

8. The method according to claim 7, wherein the third message comprises third indication information, and the third indication information indicates whether the first system information received by the terminal device is tampered with.

9. The method according to claim 7 or 8, wherein when the first system information received by the terminal device is tampered with, the third message comprises the first system information that is not tampered with.

10. A communication method, wherein the method is applied to a second network device, and the method comprises:
receiving a first message sent by a terminal device, wherein the first message is used to request security verification-based first system information; and
sending the first system information to the terminal device.

11. The method according to claim 10, wherein the method further comprises:
sending second indication information to the terminal device, wherein the second indication information indicates that the second network device supports the security verification-based system information.

12. The method according to claim 10 or 11, wherein the first message is a radio resource control RRC system information request message or a dedicated system information request message.

13. The method according to any one of claims 10 to 12, wherein the first system information is comprised in a second message, and security protection is performed on the second message.

14. The method according to claim 13, wherein the method further comprises:
sending a first request to a first network device; and
receiving a first response sent by the first network device, wherein the first response comprises a security protection parameter, the security protection parameter is determined based on security parameter information, and the security protection parameter is used to perform security protection on the second message.

15. The method according to claim 14, wherein the first request comprises a cause value, the cause value is that the terminal device requests the security verification-based first system information, and the cause value indicates the first network device to determine whether to perform anchor relocation.

16. The method according to claim 14 or 15, wherein the first response further indicates to perform anchor relocation.

17. The method according to claim 13, wherein the method further comprises:
sending a second request to a first network device, wherein the second request comprises the first system information; and
receiving a second response sent by the first network device, wherein the second response comprises the second message, the second message comprises the first system information, and security protection is performed on the second message.

18. The method according to claim 17, wherein the second request comprises a cause value, the cause value is that the terminal device requests the security verification-based first system information, and the cause value indicates the first network device to determine whether to perform anchor relocation.

19. The method according to claim 17 or 18, wherein the second response further indicates not to perform anchor relocation.

20. The method according to any one of claims 10 to 12, wherein security protection is not performed on the first system information.

21. The method according to claim 20, wherein the method further comprises:
sending a third request to a first network device, wherein the third request is used to request a hash parameter of security verification; and
receiving a third response sent by the first network device, wherein the third response comprises a third message, and the third message comprises the hash parameter.

22. The method according to claim 21, wherein the third request comprises a cause value, the cause value is that the terminal device requests the security verification-based first system information, and the cause value indicates the first network device to determine whether to perform anchor relocation.

23. The method according to claim 21 or 22, wherein the third response further indicates not to perform anchor relocation.

24. The method according to any one of claims 20 to 23, wherein the method further comprises:
sending a hash security instruction to the terminal device, wherein the hash security instruction comprises the hash parameter, and the hash parameter is used to determine a hash value of the first system information; and
receiving the hash value that is of the first system information and that is sent by the terminal device, wherein the hash value of the first system information is used to determine whether the first system information received by the terminal device is tampered with.

25. The method according to any one of claims 20 to 24, wherein the method further comprises:
sending the third message to the terminal device, wherein security protection is performed on the third message.

26. The method according to claim 25, wherein the third message comprises third indication information, and the third indication information indicates whether the first system information received by the terminal device is tampered with.

27. The method according to claim 25 or 26, wherein when the first system information received by the terminal device is tampered with, the third message comprises the first system information that is not tampered with.

28. A communication method, wherein the method is applied to a first network device, and the method comprises:
obtaining security parameter information; and
sending first indication information and the security parameter information to a terminal device, wherein the first indication information indicates that use of a security verification-based system information obtaining mechanism is allowed, and the security parameter information is used to perform security verification on system information.

29. A communication apparatus, comprising a processor and a memory, wherein the memory is configured to store a computer program, and the processor runs the computer program, so that the apparatus performs the method according to any one of claims 1 to 28.

30. A computer-readable storage medium, configured to store a computer program, wherein when the computer program is run on a computer, the computer is enabled to perform the method according to any one of claims 1 to 28.
